# EUROPÄISCHE PATENTSCHRIFT

(11) **EP 0 913 225 B1**
(45) Veröffentlichungstag und Bekanntmachung des Hinweises auf die Patenterteilung: **01.02.2006**
(21) Anmeldenummer: 98115217.6
(22) Anmeldetag: 13.08.1998
(51) Int. Cl.: B23Q 1/00, B23Q 7/00, B23Q 3/08, B23Q 7/14, B23Q 41/02, B23Q 11/08

(54) **Maschinenzentrum, bei dem Werkstückhalter eine Mehrfachkupplung mit Abdeckung aufweisen**
Machining centre in which the workpiece holders have a multiple connector with cover
Centre d'usinage dans lequel les porte-pièces sont pourvus d'une connexion multiple avec couvercle

(30) Priorität: 01.11.1997 DE 19748336
(43) Veröffentlichungstag der Anmeldung: 06.05.1999
(73) Patentinhaber: Chiron-Werke GmbH & Co. KG, 78532 Tuttlingen (DE)
(72) Erfinder: Schweizer, Anton Dipl.-Ing., 78573 Wurmlingen (DE)
(74) Vertreter: Otten, Hajo

(56) Entgegenhaltungen:
- EP-A- 0 219 594
- DE-A- 19 516 849
- US-A- 5 161 662

## Beschreibung

Die vorliegende Erfindung betrifft ein Maschinenzentrum mit Werkzeugmaschinen, die jeweils einen Arbeitsraum zum Bearbeiten von Werkstücken aufweisen, einer Spannstation, in der zur bearbeitende Werkstücke in Werkstückhalter eingespannt werden, und einem Ladegerät, das die Werkstückhalter zwischen der Spannstation und dem Arbeitsraum zumindest einer Werkzeugmaschine transportiert.

Ein derartiges Maschinenzentrum ist aus der DE 195 16 849 A1 bekannt.

Bei dem bekannten Maschinenzentrum sind eine Reihe von Werkzeugmaschinen nebeneinander angeordnet, wobei neben dieser Reihe von Werkzeugmaschinen eine Be-/Entladestation vorgesehen ist, in der sich eine Spannstation befindet. In der Spannstation werden Werkstücke in Werkstückhalter eingesetzt, die von einem Schwenkarm eines Ladegerätes gehalten werden.

Nach dem Bestücken des Werkstückhalters mit einem neuen Werkstück wird der Schwenkarm eingeschwenkt und das Ladegerät fährt zu einer der Werkzeugmaschinen, wo der Schwenkarm wieder ausgeschwenkt und der Werkstückhalter in einen Vorrichtungshalter eingespannt wird, der im Arbeitsraum dieser Werkzeugmaschine vorgesehen ist. Nach der Bearbeitung des Werkstückes wird der Werkstückhalter entweder für eine weitere Bearbeitung zu einer anderen Werkzeugmaschine oder aber zu der Be-/Entladestation zurücktransportiert, um dort das bearbeitete Werkstück gegen ein noch zu bearbeitendes Werkstück auszutauschen.

Der Schwenkarm des Ladegerätes erfaßt den Werkstückhalter einseitig, wobei dieser das zu bearbeitende Werkstück ebenfalls einseitig ergreift. Auch der Vorrichtungshalter in den Arbeitsräumen ergreift den Werkstückhalter einseitig, wobei wahlweise ein Widerlager vorgesehen sein kann, um eingespannte Werkstücke besser zentrieren zu können.

Es hat sich nun herausgestellt, daß das Handling der Werkstücke bzw. Werkstückhalter bei dem bekannten Maschinenzentrum insbesondere dann Nachteile mit sich bringt, wenn voluminöse und/oder schwere Werkstücke bearbeitet werden sollen. Zum einen geht überraschenderweise die Bearbeitunsgenauigkeit sowie die Reproduzierbarkeit der Bearbeitung zurück, wenn schwerere und/oder voluminösere Werkstücke verwendet werden. Diese Nachteile können teilweise beseitigt oder zumindest verringert werden, indem das Werkstückhandling insgesamt mit geringeren Geschwindigkeiten erfolgt. Dies bedeutet jedoch, daß zur Erreichung einer hohen Bearbeitungsgenauigkeit sowie Reproduzierbarkeit bei der Bearbeitung von schweren und/oder voluminösen Werkstücken die Werkstück-zu-Werkstück-Zeit bei dem bekannten Maschinenzentrum reduziert wird, was natürlich von Nachteil ist.

Die US 5 161 662 beschreibt eine Werkzeugmaschine mit einem sogenannten Palettenwechsler, bei der nacheinander verschiedene Paletten auf den Werkstücktisch transportiert und dort arretiert werden. Auf jeder Palette ist eine sogenannte Vorrichtung vorgesehen, die in diesem Dokument auch als Index-Kopf bezeichnet wird. Der Index-Kopf trägt das zu bearbeitende Werkstück, das nach dem Arretieren der Palette auf dem Werkstücktisch mit der Werkzeugmaschine bearbeitet wird.

Um die auf der Palette befindliche Vorrichtung mit Steuersignalen zu versorgen, ist eine Mehrfachkupplung vorgesehen, deren beweglicher Teil auf dem Werkstücktisch und deren fester Teil jeweils auf einer der einzuwechselnden Paletten angeordnet ist.

Die EP 0 418 931 A2 beschreibt eine Testanordnung für eine Werkzeugmaschine, wo an einem Werkstückhalter eine Mehrfachkupplung zur Übertragung von fluidischer Energie vorgesehen ist, die in einer Spannstation wahlweise angedockt wird.

Vor diesem Hintergrund ist es Aufgabe der vorliegenden Erfindung, das eingangs erwähnte Maschinenzentrum derart weiterzubilden, daß auf konstruktiv einfache Weise eine erhöhte Bearbeitungsgeschwindigkeit und -genauigkeit insbesondere bei schweren und/oder voluminösen Werkstücken erreicht wird.

Bei dem eingangs erwähnten Maschinenzentrum wird diese Aufgabe dadurch gelöst, daß an dem Werkstückhalter eine Mehrfachkupplung zur Übertragung von fluidischer Energie vorgesehen ist, die in der Spannstation wahlweise angedockt wird, der Werkzeughalter eine Vorrichtung mit selbsthemmenden Spannelementen zum lagegenauen Einspannen eines Werkstückes umfaßt, wobei die Vorrichtung ein Kupplungsmodul zur Versorgung der Spannelemente mit fluidischer Energie umfaßt, und die Vorrichtung an zumindest einer ihrer Stirnseiten ein Halteteil aufweist, über das sie in der Spannstation und in einem Arbeitsraum in ein Widerlager eingespannt wird.

Die der Erfindung zugrundeliegende Aufgabe wird auf diese Weise vollkommen gelöst.

Die Erfinder der vorliegenden Anmeldung haben nämlich erkannt, daß die Beeinträchtigung der Bearbeitungsgenauigkeit bei schweren Werkstücken unter anderem darauf zurückzuführen ist, daß die Haltekräfte in den Werkstückhaltern nicht ausreichen und ferner die Position der Werkstücke nicht hinreichend kontrolliert werden kann. Über die Mehrfachkupplung kann jetzt fluidische Energie einerseits zur Betätigung von selbsthemmenden Spannelementen sowie andererseits zur Abfrage von Staudruckmeldern verwendet werden, die die Position des Werkstückes über Anschläge etc. anzeigen. Durch ein lagegenaues Einsetzen von Werkstücken in den Werkstückhalter sowie ggf. Erhöhung der Haltekraft in dem Arbeitsraum läßt sich eine deutliche Verbesserung der Bearbeitungsgenauigkeit erzielen, wobei wegen selbsthemmender Spannelemente ein schnelles Verfahren des Ladegerätes möglich ist, wodurch sich auch die Bearbeitungsgeschwindigkeit erhöht.

Durch die Versorgung der Spannelemente läßt sich die Bearbeitungsgenauigkeit noch einmal deutlich steigern, denn ein Teil des Genauigkeitsverlustes bei schwereren Werkstücken im Stand der Technik ist darauf zurückzuführen, daß diese Werkstücke in der Spannstation nicht sicher genug in dem Werkstückhalter gehalten werden. Über das Kupplungsmodul werden jetzt die Spannelemente sowohl in der Spannstation als auch in dem Arbeitsraum mit fluidischer Energie versorgt, wodurch die Werkstücke beim Bearbeiten sowie Positionieren sicher gehalten werden können. Das Kupplungsmodul ermöglicht es ferner, daß selbsthemmende Spannelemente verwendet werden, deren Spannkraft im Arbeitsraum durch die fluidische Energie erhöht wird, und die in der Spannstation aktiv geöffnet werden können. Beim Transportieren zwischen der Spannstation und dem Arbeitsraum halten diese selbsthemmenden Spannelemente die Werkstücke so sicher, daß diese sehr schnell bewegt und verfahren werden können, ohne ihre Lage in der Vorrichtung zu verändern.

Während die Mehrfachkupplung nur in der Spannstation verwendet und im Arbeitsraum erfindungsgemäß abgedeckt wird, findet das Kupplungsmodul sowohl in der Spannstation als auch in dem jeweiligen Arbeitsraum im obigen Sinne Verwendung. Die Mehrfachkupplung ermöglicht dabei ein kontrolliertes Einspannen der Werkstücke in den Spannelementen. Die Mehrfachkupplungen können nämlich Pneumatikverbindungen herstellen, um über Staudruckabfragen Anschläge etc. zu kontrollieren, die ein genaues Einlegen der Werkstücke anzeigen. Da diese Mehrfachkupplung nur in der Spannstation wahlweise angekoppelt wird, ist es möglich, sowohl im Arbeitsraum als auch in der Spannstation bei offener Mehrfachkupplung die Vorrichtung über einen Drehverteiler zu drehen, der nur das Kupplungsmodul umfaßt, das zum Spannen der Spannelemente benötigt wird. Die große Anzahl von Kupplungselementen, die für die Staudruckabfragen etc. benötigt werden, kann in der Mehrfachkupplung vorgesehen sein, deren Gegenstück nur in der Spannstation erforderlich ist, was insgesamt bei dem neuen Maschinenzentrum konstruktive Vorteile bringt.

Dabei ist es bevorzugt, wenn eine Abdeckung für Kupplungselemente der Mehrfachkupplung vorgesehen ist.

Hier ist von Vorteil, daß die Kupplungselemente dort nicht verschmutzen können, wo sie nicht benötigt werden. Hierdurch erhöht sich noch einmal die Bearbeitungsgeschwindigkeit, denn es ist nicht erforderlich, vor dem Einsatz der Mehrfachkupplung die Kupplungselemente abzuspülen, um für eine sichere Funktion zu sorgen. Die Abdeckung kann dabei z.B. federbelastet und selbstschließend sein, so daß sie nur dann geöffnet wird, wenn die Mehrfachkupplung angedockt wird.

Andererseits ist es jedoch bevorzugt, wenn ein Handlingsystem zum Aufsetzen/Abnehmen der Abdeckung vorgesehen ist.

Hier ist von Vorteil, daß für eine fehlersichere Funktion der Abdeckung gesorgt wird, die bei federbelasteten Deckeln nicht immer gewährleistet ist. Eine hohe Fehlersicherheit erhöht jedoch insgesamt die Bearbeitungsgenauigkeit, denn Fehlfunktionen wegen infolge nicht schließender Abdeckungen verschmutzter Kupplungselemente werden ausgeschlossen.

Dabei ist es weiter bevorzugt, wenn das Handlingsystem an dem Ladegerät angeordnet ist und die Abdeckung beim Transport des Werkzeughalters aufsetzt/abnimmt.

Diese Maßnahme ist zum einen konstruktiv von Vorteil, denn es wird auf ein Handlingsystem in jedem Arbeitsraum verzichtet. Hier sei bemerkt, daß die Kupplungselemente insbesondere im Arbeitsraum abgedeckt werden müssen, wo sie einerseits nicht benötigt werden, andererseits aber eine besondere Gefahr der Verschmutzung besteht. Es wäre also denkbar, in jedem Arbeitsraum ein gesondertes Handlingsystem mit einem eigenen Deckel vorzusehen, das die nicht benötigten Kupplungselemente abdeckt. Konstruktiv einfacher wäre es dagegen, nur ein Handlingsystem in der Spannstation vorzusehen, in der der Deckel jeweils vor dem Einsatz von der Mehrfachkupplung abgenommen und später wieder aufgesetzt wird, so daß jede Vorrichtung einen eigenen Deckel aufweist. Die Zeitersparnis ist auf diese Weise jedoch noch nicht groß genug, denn auch das Aufsetzen/Abnehmen der Deckel erhöht hier noch die Werkstück-zu-Werkstück-Zeit. Ist das Handlingsystem jetzt jedoch an dem Ladegerät angeordnet, so kann der Deckel zeitgleich zu dem Verfahren des Ladegerätes zwischen Arbeitsraum und Spannstation aufgesetzt bzw. abgenommen werden, so daß sich durch dieses Deckelhandling die Werkstück-zu-Werkstück-Zeit nicht verändert.

Dabei ist es weiter bevorzugt, wenn das Ladegerät zum Transportieren des Werkstückhalters einen Schwenkarm aufweist, der beim Verfahren des Ladegerätes, eingeschwenkt und zum Werkstückwechsel in den Arbeitsraum bzw. die Spannstation geschwenkt wird, und das Handlingsystem an einem Tragteil für den Schwenkarm derart angeordnet ist, daß bei eingeschwenktem Schwenkarm die Mehrfachkupplung gegenüber dem Handlingsystem zu liegen kommt.

Diese Maßnahme ist konstruktiv von Vorteil, das Handlingsystem muß nur eine Linearbewegung auf die Mehrfachkupplung zu bzw. von dieser weg machen und den Deckel ergreifen, um ihn abzuziehen, bzw. freigeben, damit er zusammen mit der Mehrfachkupplung in den Arbeitsraum geschwenkt werden kann.

Dabei ist es bevorzugt, wenn an dem Widerlager eine der Mehrfachkupplung zugeordnete Andockvorrichtung mit Kupplungselementen vorgesehen ist, die unabhängig von dem Widerlager im Sinne eines Schließens und Öffnens der Mehrfachkupplung verfahrbar ist.

Auch diese Maßnahme ist konstruktiv von Vorteil, das Öffnen und Schließen der Mehrfachkupplung in der Spannstation erfolgt durch eine einfache Linearbewegung, ist also in sehr kurzer Zeit durchzuführen.

Weiter ist es bevorzugt, wenn die Mehrfachkupplung eine an einer Stirnseite angeordnete, mit Kupplungselementen bestückte Trägerplatte und die Andockvorrichtung einen mit zugeordneten Kupplungselementen bestückten Schlitten umfaßt, wobei zwischen Trägerplatte und Schlitten eine Verriegelungseinheit vorgesehen ist.

Diese Verriegelungseinheit sorgt für ein sicheres Einkuppeln der Mehrfachkupplung und damit für zuverlässige Steuersignale/Meßsignale, was insgesamt der Bearbeitungsgenauigkeit und -geschwindigkeit zugute kommt.

Weiter ist es bevorzugt, wenn die Abdeckung einen Deckel mit Aufnahmebohrungen für Kupplungselemente der Trägerplatte umfaßt, wobei eine der Aufnahmebohrungen eine Kugel-Feder-Rastung aufweist, die auf einem Kupplungselement verrastet.

Hier ist von Vorteil, daß der Deckel zum einen sämtliche Kupplungselemente in Aufnahmebohrungen aufnimmt, also schützend umschließt, wobei die Halterung des Deckels an der Mehrfachkupplung über eine Kugel-Feder-Rastung erfolgt, also nicht aktiv betätigt werden muß.

Dabei ist es bevorzugt, wenn das Handlingsystem aktiv zu öffnende Greiferbacken umfaßt.

Hier ist von Vorteil, daß ein Handlingsystem mit aktiv zu öffnenden Greiferbacken ein sehr sicheres Aufsetzen und Abnehmen des Deckels ermöglicht.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen. Ein Ausführungsbeispiel der Erfindung ist in der Zeichnung dargestellt und wird in der nachfolgenden Beschreibung näher erläutert. Es zeigen:
- Fig. 1: eine Vorderansicht des neuen Maschinenzentrums, im Ausschnitt;
- Fig. 2: einen Schnitt durch das Maschinenzentrum aus Fig. 1 längs der Linie II-II, ohne Ladegerät im Laderraum;
- Fig. 3: einen Schnitt längs der Linie III-III aus Fig. 1, mit in Position befindlichem Ladegerät und eingeklapptem Schwenkarm;
- Fig. 4: eine Darstellung wie Fig. 3, aber mit ausgeklapptem Schwenkarm;
- Fig. 5: in einer vergrößerten Seitenansicht die Spannstation des neuen Maschinenzentrums mit einer zu bearbeitende Werkstücke aufnehmenden Vorrichtung, die zwischen einem festen und einem beweglichen Widerlager einspannbar ist, jedoch noch von Greiferhänden getragen wird;
- Fig. 6: eine Darstellung wie Fig. 5, jedoch mit zwischen dem beweglichen und dem festen Widerlager eingespannter Vorrichtung;
- Fig. 7: eine Darstellung wie Fig. 6, jedoch mit angedockter Mehrfachkupplung;
- Fig. 8: eine Draufsicht auf die dem beweglichen Widerlager zugewandte Stirnseite der Vorrichtung aus Fig. 5 mit Trägerplatte für die Mehrfachkupplung;
- Fig. 9: eine Draufsicht auf das bewegliche Widerlager aus Fig. 5 mit Andocksystem;
- Fig. 10: eine Darstellung des oberen Bereiches des Ladegerätes mit Schwenkarm und Doppelgreifer, in einer Darstellung wie Fig. 2, also auf die dem beweglichen Widerlager zugewandte Seite;
- Fig. 11: in schematischer Darstellung eine Ansicht des Ladegerätes gemäß Pfeil XI aus Fig. 10;
- Fig. 12: eine Draufsicht auf den Deckel der Vorrichtung aus Fig. 10; und
- Fig. 13: eine schematische Seitenansicht des Handlingsystems aus Fig. 11.

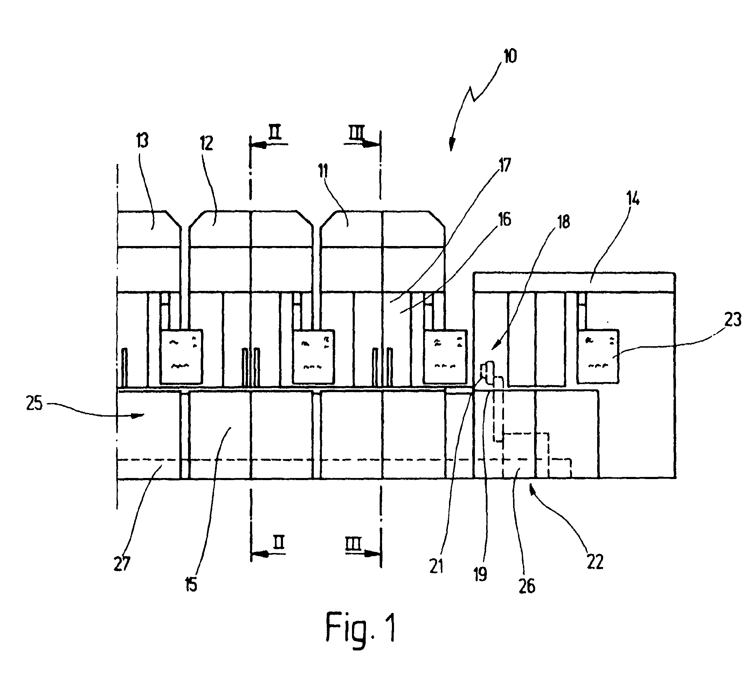

Fig. 1 zeigt in einer Frontansicht ein Maschinenzentrum 10, bei dem Werkzeugmaschinen 11, 12 und 13 (nur angedeutet) nebeneinander angeordnet sind. Neben den Werkzeugmaschinen 11, 12 und 13 ist eine Be-/Entladestation 14 vorgesehen.

Die Werkzeugmaschinen 11, 12, 13 weisen eine sie vollständig umgebende Verkleidung 15 auf, in der bei jeder Werkzeugmaschine 11, 12, 13 eine Bedienertür 16 vorgesehen ist, durch die hindurch eine Bedienungsperson Zugriff auf einen Arbeitsraum 17 hat. Durch diese Bedienertür 16 hindurch werden bei den einzelnen Werkzeugmaschinen 11, 12, 13 Rüst- und Servicemaßnahmen durchgeführt.

In der Be-/Entladestation 14 ist eine lediglich schematisch angedeutete Spannstation 18 vorgesehen, in der einzelne Werkstückhalter 19 mit zu bearbeitenden Werkstücken 21 versehen werden. Die so mit Werkstücken 21 versehenen Werkstückhalter 19 werden mittels einer Ladevorrichtung 22 zu den einzelnen Werkzeugmaschinen 11, 12, 13 transportiert und dort in den jeweiligen Arbeitsraum 16 eingewechselt und bearbeitet. Die fertig bearbeiteten Werkstücke 21 werden mit ihren Werkstückhaltern 19 aus den Arbeitsräumen 17 zurück zu der Spannstation 18 transportiert, wo sie gegen neu zu bearbeitende Werkstücke 21 ausgewechselt werden.

In Fig. 1 ist ferner zu erkennen, daß an jeder Werkzeugmaschine 11, 12, 13 und der Be-/Entladestation 14 ein Bedienerpult 23 vorgesehen ist, über das die üblichen Bedienereingaben erfolgen können.

Bei dem neuen Maschinenzentrum 10 aus Fig. 1 ist die Ladevorrichtung 22 in einem Laderraum 25 angeordnet, der sich unterhalb der Arbeitsräume 17 der Werkzeugmaschinen 11, 12, 13 und vorzugsweise innerhalb der Verkleidung 15 befindet. In diesem Laderraum 25 läuft ein Ladegerät 26 längs einer Führungsschiene 27 hin und her und transportiert dabei die die Werkstücke 21 enthaltenden Werkstückhalter 19 zwischen der Spannstation 18 und den Arbeitsräumen 17 oder zwischen einzelnen Arbeitsräumen 17 verschiedener Werkzeugmaschinen 11, 12, 13.

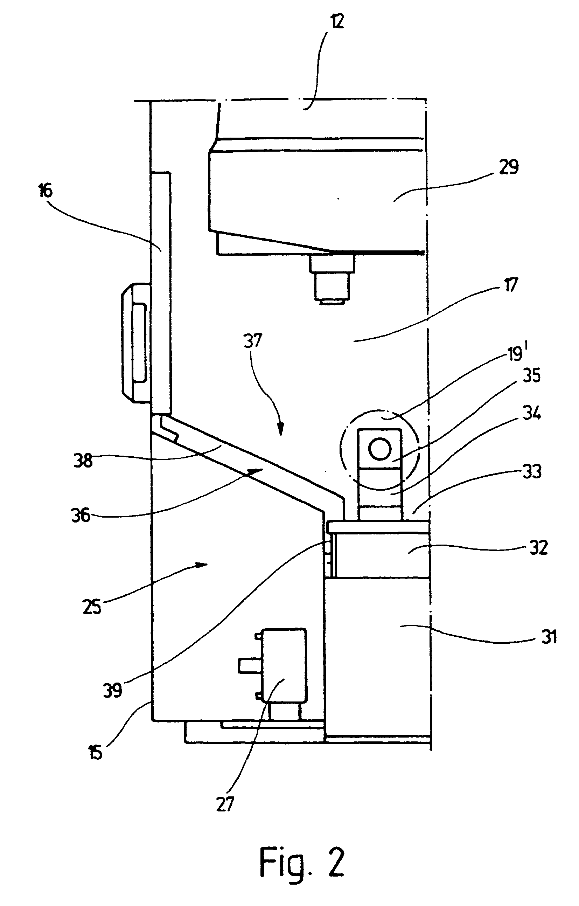

In Fig. 2 ist in einer ausschnittsweisen Schnittdarstellung längs der Linie II-II aus Fig. 1 ein Querschnitt durch die Werkzeugmaschine 12 gezeigt, wobei ein Spindelkopf 29 angedeutet ist, der zum Bearbeiten der Werkstücke in dem Arbeitsraum 17 vorgesehen ist.

Die Werkzeugmaschine 12 umfaßt einen Maschinenfuß 31, auf dem ein schematisch angedeuteter Werkstücktisch 32 vorgesehen ist, der sozusagen eine Arbeitsfläche 33 in dem Arbeitsraum 17 aufspannt. Auf dem Werkstücktisch 32 ist ein Vorrichtungshalter 34 angeordnet, der als festes Widerlager dazu ausgerüstet ist, die Werkstückhalter 19 zu ergreifen und während der Bearbeitung durch Werkzeuge in dem Spindelkopf 29 zu halten. In Fig. 2 ist mit 19' ein Werkstückhalter bezeichnet, der ein fertig bearbeitetes Werkstück hält, wobei der Werkstückhalter 19' lediglich schematisch durch einen Kreis angedeutet ist.

Durch eine Ladeöffnung 36 hindurch ist der Laderraum 25 mit dem Arbeitsraum 17 verbunden. Dabei ist eine Abdeckung 37 vorgesehen, die während der Bearbeitung der Werkstücke durch Werkzeuge in dem Arbeitsraum 17 geschlossen ist, so daß keine Verschmutzungen in den Laderraum 25 gelangen.

Die Abdeckung 37 ist zweiteilig ausgebildet und umfaßt eine Schiebeabdeckung 38, die in Fig. 2 nach oben weist und zu der Arbeitsfläche 33 hin geneigt ist, sowie eine Klappabdeckung 39, die in etwa senkrecht zu der Arbeitsfläche 33 verläuft und auf diese zu geklappt werden kann. Es ist zu erkennen, daß die Schiebeabdeckung 38 über die Klappabdeckung 39 übergreift, so daß herumspritzendes Bohrwasser, herumfliegende Werkstückspäne etc. auch nicht zwischen der Schiebeabdeckung 38 und der Klappabdeckung 39 hindurch in den Laderraum 25 gelangen können.

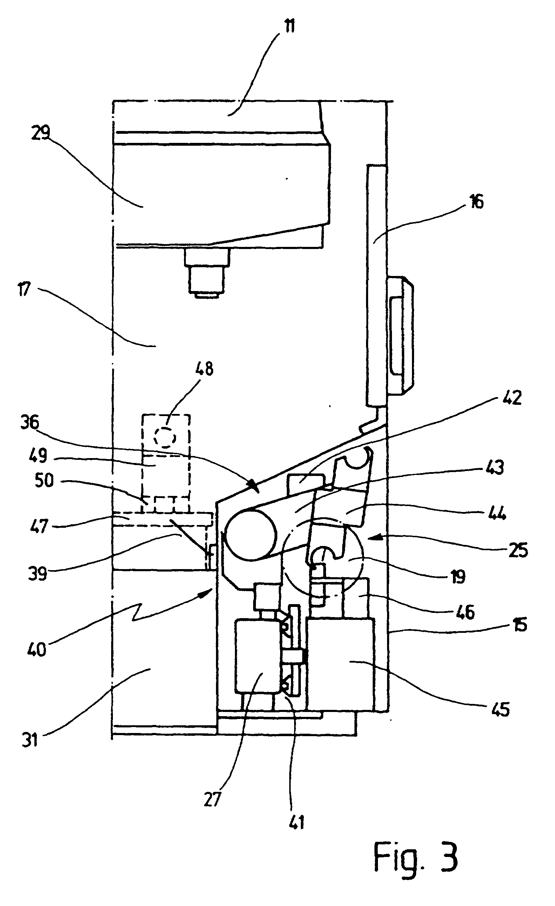

In Fig. 3 ist jetzt in einer Darstellung ähnlich wie Fig. 2 jedoch längs der Linie III-III aus Fig. 1 die Situation gezeigt, in der die Abdeckung 37 geöffnet und das Ladegerät 26 in den Bereich unterhalb des Arbeitsraumes 17 hier der Werkzeugmaschine 11 gefahren ist.

Dieses Ladegerät 26 ist sozusagen ein selbstfahrender Werkstückwechsler 40, der eine an der Führungsschiene 27 angreifende Antriebseinheit 41 mit Motor 42 aufweist, die auf geeignete Weise für die Verfahrbarkeit des Ladegerätes 26 längs der im Querschnitt vorzugsweise profilierten Führungsschiene 27 sorgt.

Der verfahrbare Werkstückwechsler 40 weist ferner einen daran klappbar befestigten Schwenkarm 43 auf, der in Fig. 3 so eingeklappt ist, daß er sich in dem Laderraum 25 befindet. An dem oberen Ende des Schwenkarmes 43 ist ein drehbarer Doppelgreifer 44 angeordnet, der an seiner einen Hand einen Werkstückhalter 19 trägt, während die andere Hand noch frei ist.

In Fig. 3 ist ferner noch ein üblicher Kabelschlepp 45 zu erkennen, der elektrische, pneumatische und ggf. hydraulische Verbindungen 46 für das Ladegerät 26 bereitstellt und dieses über die Verbindungen 46 mit der zugeordneten Steuereinheit/dem Bedienerpult 23 verbindet.

In Fig. 3 ist weiter ein hinter der Klappabdeckung 39 angeordneter Werkstücktisch 47 zu erkennen, der ein bewegliches Widerlager 48 trägt, das mittels eines Motors 49 auf Schienen 50 verfahrbar ist, um den Werkstückhalter 19 besser zu zentrieren.

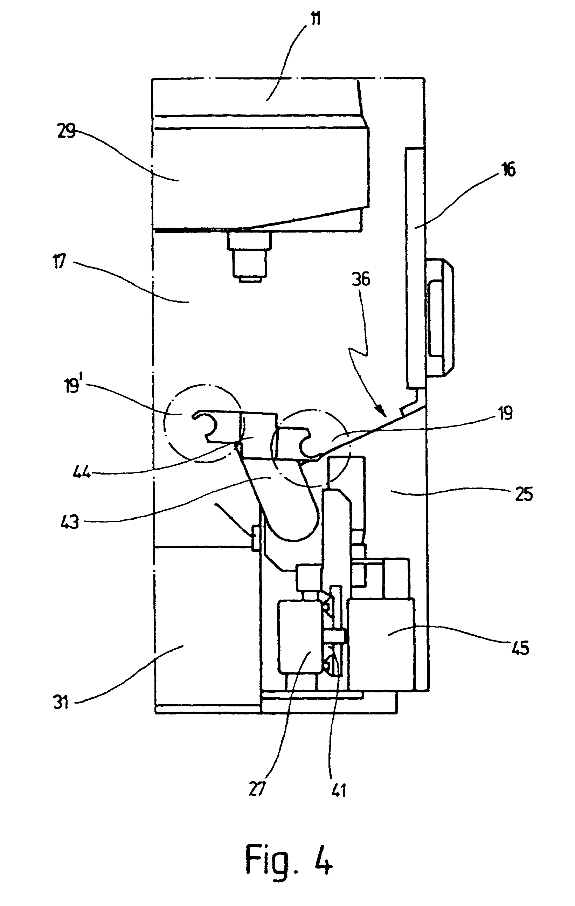

In der Darstellung der Fig. 4, die ansonsten der Fig. 3 entspricht, wurde der Schwenkarm 43 durch die Ladeöffnung 36 hindurch in den Arbeitsraum 17 geschwenkt oder ausgefahren, wo der Doppelgreifer 44 bereits den Werkstückhalter 19' ergriffen hat, der ein Werkstück trägt, das von der Werkzeugmaschine 11 bereits bearbeitet wurde. Durch eine Schwenkbewegung in der Ebene der Fig. 4 um 180 werden jetzt der Werkstückhalter 19 und der Werkstückhalter 19' ausgetauscht, so daß der in Fig. 2 zu erkennende Vorrichtungshalter 34 den Werkstückhalter 19 mit dem noch unbearbeiteten Werkstück übernehmen kann. Daraufhin wird der Schwenkarm 43 wieder eingeklappt oder eingezogen, so daß die in Fig. 3 gezeigte Stellung eingenommen wird.

Schließlich wird die Abdeckung 37 geschlossen, so daß die Bearbeitung des neuen Werkstückes in dem Arbeitsraum 17 in der Werkzeugmaschine 11 erfolgen kann, während das Ladegerät 26 den Werkstückhalter 19' zu einer weiteren Werkzeugmaschine oder der Be-/Entladestation 18 bringt und dort gegen einen Werkstückhalter 19 austauscht, der in der Spannstation 18 mit einem noch zu bearbeitenden Werkstück versehen wurde.

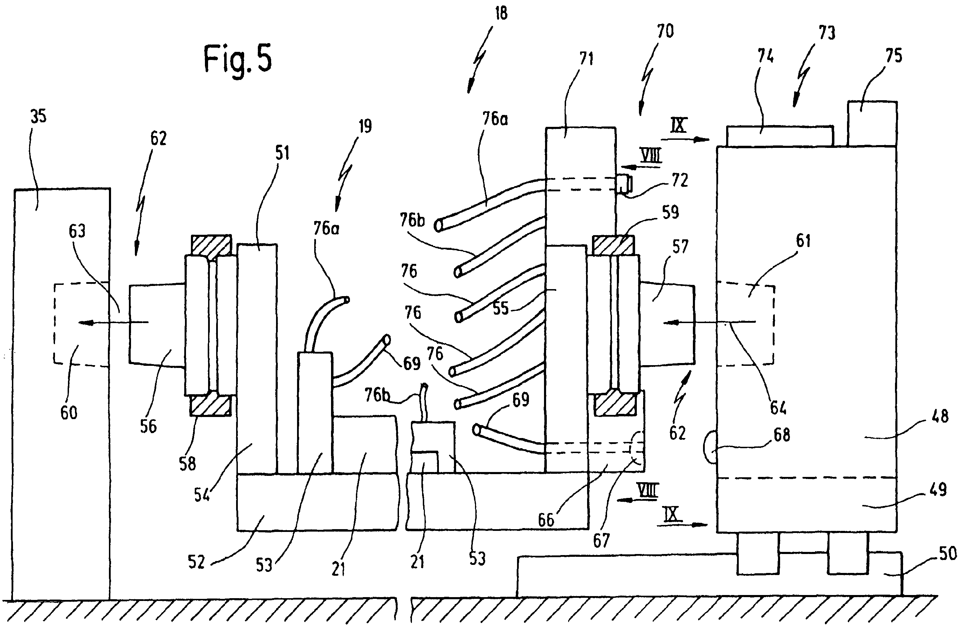

In Fig. 5 ist die Spannstation 18 vergrößert und detaillierter dargestellt. Als Werkstückhalter 19 dient hier erfindungsgemäß eine Vorrichtung 51 nach Art einer Wiegenplatten, die auf ihrer Bodenplatte 52 selbsthemmende Spannelemente 53 aufweist, um das schematisch angedeutete Werkstück 21 an beiden Seiten einzuspannen. Durch die Wahl von Länge und Breite der Bodenplatte 52 kann die Vorrichtung 51 beliebig sperrige Werkstücke 21 aufnehmen, wobei durch die sich vorzugsweise gegenüberliegenden Spannelemente 53 auch sehr schwere Werkstücke 21 sicher gehalten werden können.

Die Vorrichtung 51 weist ferner zwei jeweils mit der Bodenplatte 52 verbundene Stirnplatten 54 und 55 auf, an denen jeweils ein an sich bekannter Hohlschaftkegel 56 bzw. 57 mit der üblichen Greifernut vorgesehen ist. Derartige Hohlschaftkegel 56, 57 werden unter anderem als Werkzeughalter bei automatischen Werkzeugwechselsystemen eingesetzt.

In Fig. 5 sind bei 58 und 59 schematisch zwei Greiferhände angedeutet, die die Vorrichtung 51 positionsgenau zwischen dem festen Widerlager 35 sowie dem beweglichen Widerlager 48 halten. An dem festen Widerlager 35 ist eine Hohlschaftkegel (HSK)-Aufnahme 60 mit üblichem Spannsatz vorgesehen, wobei an dem beweglichen Widerlager 48 ebenfalls eine HSK-Aufnahme 61 mit üblichem Spannsatz vorgesehen ist. HSK 56 und 57 sind genauso wie die HSK-Aufnahmen 60 bzw. 61 Halteteile 62, über die die Vorrichtung 51 in der Spannstation 18 fest eingespannt werden kann. Hierzu verfahren die Greiferhände 58, 59 die Vorrichtung 51 in Richtung eines Pfeiles 63, so daß der HSK 56 in die HSK-Aufnahme 60 eingespannt wird. Daraufhin wird das beweglichen Widerlager 48 durch den Motor 49 auf den Schienen 50 in Richtung eines Pfeiles 64 nach links verfahren, bis der HSK 57 in der HSK-Aufnahme 61 verspannt ist.

Unter dem HSK 57 ist ein Kupplungsmodul 66 angeordnet, das ein Kupplungselement 67 trägt, das mit einem Kupplungselement 68 an dem beweglichen Widerlager 48 zusammenwirkt, so daß über eine Leitung 69 fluidische Energie zur Betätigung der Spannelemente 53 zu der Vorrichtung 51 zugeführt wird. Über diese fluidische Energie, die in der Regel auf Hydraulikbasis geliefert wird, können Werkstücke 21 in die Vorrichtung 51 eingespannt bzw. aus ihr wieder gelöst werden. Die Spannelemente 53 sind selbsthemmend, so daß während des Transportes der Vorrichtung 51 durch das Ladegerät 56 das Werkstück 21 seine Position nicht verändert.

Zusätzlich zu dem Kupplungsmodul 66, das sowohl in der Spannstation 18 als auch in dem jeweiligen Arbeitsraum 17 einer jeweiligen Werkzeugmaschine 11, 12 bzw. 13 zum Einsatz kommt, weist die Vorrichtung 51 noch eine Mehrfachkupplung 70 auf, die nur in der Spannstation 18 Verwendung findet.

Diese Mehrfachkupplung 70 umfaßt eine an der Stirnplatte 55 befestigte Trägerplatte 71, an der mehrere Kupplungselemente 72 vorgesehen sind, von denen in der Seitenansicht der Fig. 5 nur eines schematisch gezeigt ist.

Die Trägerplatte 71 arbeitet mit einem Andocksystem 73 zusammen, das einen Schlitten 74 trägt, der über einen Motor 75 in Fig. 5 nach links verfahren werden kann. An dem Schlitten 74 sind den Kupplungselementen 72 entsprechende Kupplungselemente vorgesehen, die in der Darstellung der Fig. 5 nicht zu sehen sind.

Über die Mehrfachkupplung 70 werden Schläuche 76 mit Druckluft versorgt, die zur pneumatischen Staudruckabfrage verwendet werden. So ist der Schlauch 76a mit dem Spannelement 53 verbunden und dient zur Positionskontrolle für das Werkstück 21.

Über die Mehrfachkupplung 70 werden Funktionen für die Vorrichtung 51 bereitgestellt, die das lagerichtige Einspannen der Werkstücke 21 betreffen und somit nur in der Spannstation 18 erforderlich sind. In den Werkzeugmaschinen 11, 12, 13 ist ebenfalls ein bewegliches Widerlager 48 vorgesehen, jedoch ohne Andocksystem 73.

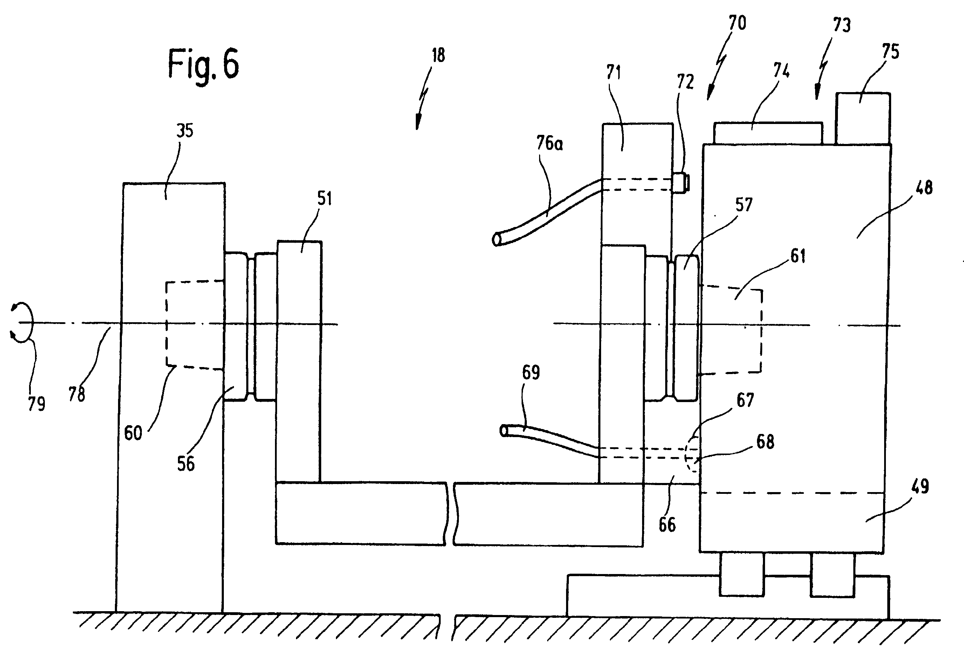

In Fig. 6 ist in einer Darstellung wie Fig. 5 der Zustand gezeigt, bei dem die Vorrichtung 51 fest zwischen dem festen Widerlager 35 und dem beweglichen Widerlager 48 eingespannt ist, das Andocksystem 73 jedoch noch nicht angekuppelt hat.

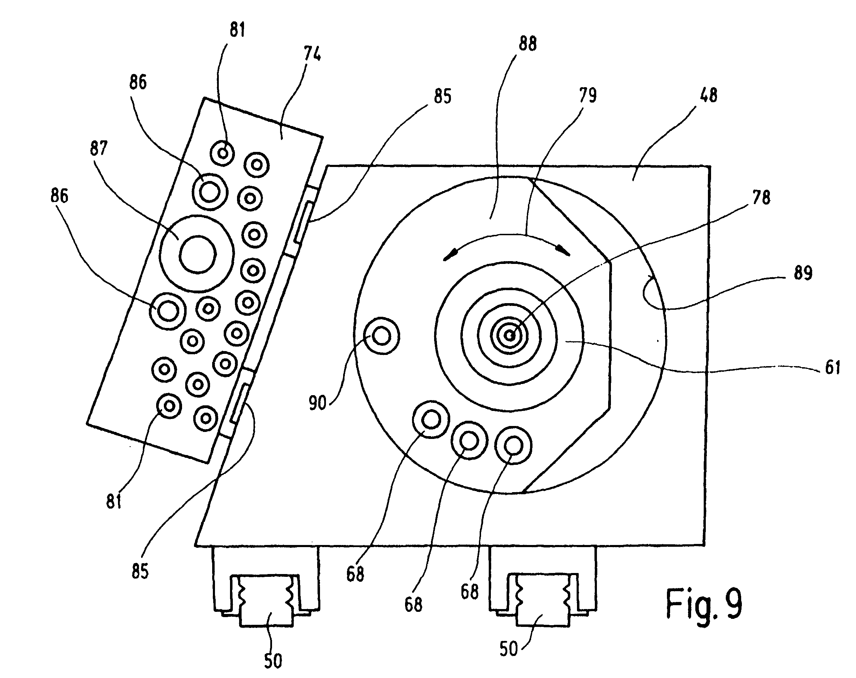

In diesem Zustand kann die Vorrichtung 51 um ihre Schwenkachse 78 in Richtung eines Doppelpfeiles 79 hin- und hergeschwenkt werden. Das bereits eingekuppelte Kupplungsmodul 66 stört dabei nicht, weil es mit einem Drehverteiler an dem beweglichen Widerlager 48 zusammenarbeitet, was im Zusammenhang mit Fig. 9 weiter unten noch erläutert wird.

Das Schwenken der Vorrichtung 51 in der Spannstation 18 ist zum einen erforderlich, damit die Vorrichtung 51 von allen Seiten gespült und abgeblasen werden kann, damit also Späne und anhaftendes Bohrwasser von einem bereits bearbeiteten Werkstück 21 entfernt werden können. Ferner wird nach der Entnahme des bearbeiteten Werkstückes 21 auch die Vorrichtung 51 selbst entsprechend gereinigt.

Die Vorrichtung 51 ist jetzt dazu ausgelegt, auch sehr voluminöse und/oder schwere Werkstücke zu tragen, wobei diese Werkstücke je nach geometrischer Anordnung nur aus einer aus der in Fig. 6 gezeigten waagerechten Position um die Schwenkachse 56 herausgeschwenkten Vorrichtung 51 entnommen bzw. in diese eingesetzt werden kann. Für diesen Werkstückwechsel ist es jedoch erforderlich, daß die in Fig. 5 gezeigten Spannelemente 53 auch in der gekippten Stellung betätigt werden können, weshalb die Hydraulikversorgung des Schlauches 69 über den bereits erwähnten Drehverteiler erfolgt.

Es sei hier bemerkt, daß auch in der Werkzeugmaschine ein derartiger Drehverteiler vorhanden ist. Zwar ist die Spannkraft der selbsthemmenden Spannelemente 53 groß genug, um dafür zu sorgen, daß das Werkstück 21 während des Transportes der Vorrichtung 51 durch das Ladegerät 26 seine Position behält, die Haltekraft reicht jedoch nicht aus, um das Werkstück 21 während der Bearbeitung in Position zu halten. Zu diesem Zweck ist wieder eine Hydraulikversorgung über die Schläuche 69 vorgesehen. Da bei der Bearbeitung die Vorrichtung 51 nach Art einer Wiegenplatte geschwenkt werden muß, enthält das bewegliche Widerlager 58, das in jeder Werkzeugmaschine 11, 12, 13 vorgesehen ist, ebenfalls einen Drehverteiler, wie er unten in Zusammenhang mit Fig. 9 beschrieben wird.

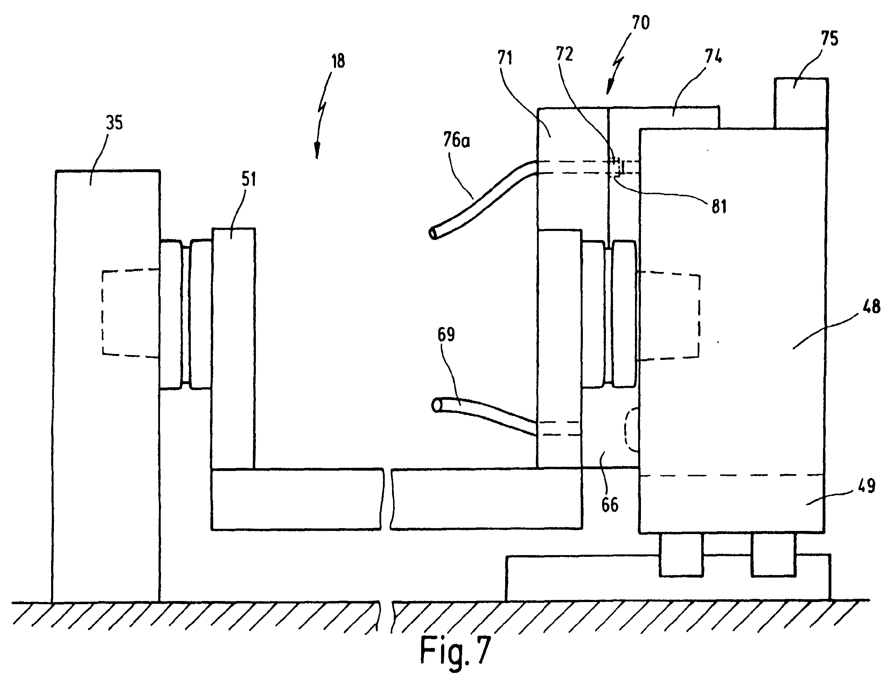

In Fig. 7 ist in einer Darstellung wie Fig. 6 jetzt ein Zustand gezeigt, bei dem der Motor 75 den Schlitten 74 des Andocksystemes 73 nach links geschoben hat, so daß jetzt die Kupplungselemente an dem Schlitten 74 mit den Kupplungselementen 72 an der Trägerplatte 71 in Eingriff gelangen. Beispielhaft ist ein Kupplungselement 81 an dem Schlitten 74 dargestellt.

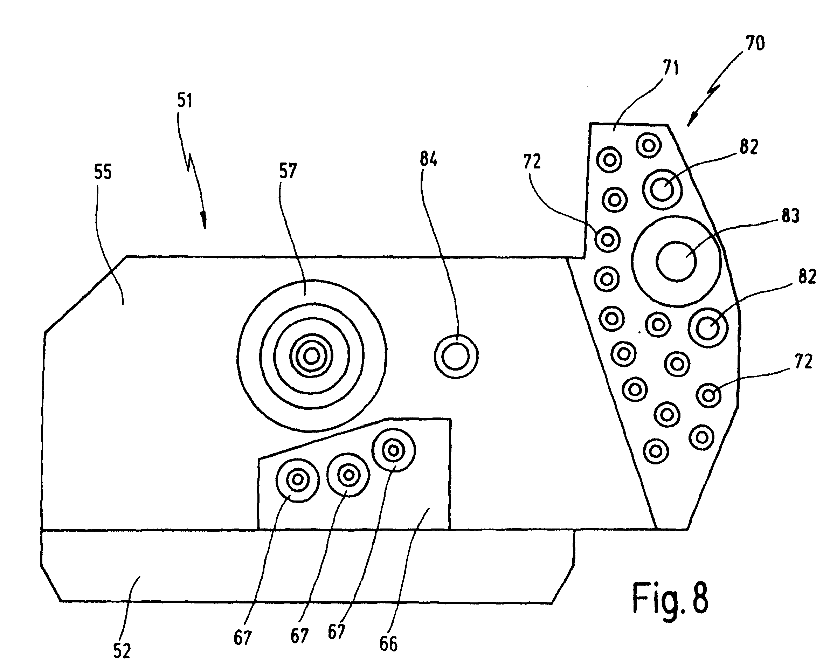

Fig. 8 zeigt eine Draufsicht auf die Stirnplatte 55 der Vorrichtung 51 in Richtung des Pfeiles VIII aus Fig. 5. Es ist zu erkennen, daß die Trägerplatte 71 insgesamt 14 Kupplungselemente 72 für Pneumatik umfaßt, wobei ferner zwei Kupplungselemente 82 für Hydraulik sowie ein Steckerteil 83 für eine Verriegelungseinheit vorgesehen sind.

Das Kupplungsmodul 66 unterhalb des HSK 57 umfaßt drei Kupplungselemente 67 für Hydraulik; diese Kupplungselemente 67 werden auch in den Werkzeugmaschinen 11, 12, 13 verwendet, während die Mehrfachkupplung 70 - wie bereits mehrfach erwähnt - nur in der Spannstation 18 zum Einsatz kommt.

Neben dem HSK 57 ist als Positionierteil noch ein Zentrierzapfen 84 gezeigt, über den das Verschwenken der Vorrichtung 51 sowie das lagegenaue Einkoppeln bewirkt wird, um Scherkräfte auf die Kupplungselemente 67 zu vermeiden.

Fig. 9 zeigt komplementär zu Fig. 8 eine Draufsicht auf das bewegliche Widerlager 48 in Richtung des Pfeiles IX aus Fig. 5. Der Schlitten 74 ist über Schienen 85 senkrecht zur Zeichenebene der Fig. 9 verfahrbar an dem selbst auch verfahrbaren Widerlager 48 gelagert. Fig. 9 zeigt, daß der Schlitten 74 zu den Kupplungselementen 82 komplementäre Kupplungselemente 86 für Hydraulik aufweist sowie ein Buchsenteil 87 trägt, das mit dem Steckerteil 83 an der Trägerplatte 71 zusammen eine Verriegelungseinheit bildet, über die die Mehrfachkupplung 70 zuverlässig positioniert und verriegelt wird, wenn der Schlitten 74 auf die Trägerplatte 71 zu gefahren wird.

Während der Schlitten 74 nur bei dem beweglichen Widerlager 48 in der Spannstation 18 vorhanden ist, entspricht das jetzt zu beschreibende restliche Widerlager 48 dem auch in den Werkzeugmaschinen 11, 12, 13 eingesetzten.

Das bewegliche Widerlager 48 enthält eine Drehverteilerplatte 88, die in Richtung des Pfeiles 79 schwenkbar in einer Kreisführung 89 geführt wird. Neben der HSK-Aufnahme 61 und den den Kupplungselementen 67 zugeordneten Kupplungselementen 68 trägt die Drehverteilerplatte 88 als Positionierteil noch eine Aufnahme 90 für den Zentrierzapfen 84, der an der Stirnplatte 55 angeordnet ist.

Durch Zusammenwirken von HSK 57 und HSK-Aufnahme 61 einerseits sowie Zentrierzapfen 84 und Aufnahme 90 andererseits wird die Vorrichtung 51 bezogen auf die Drehverteilerplatte 88 zentriert, wobei bei einem Verdrehen der Drehverteilerplatte 88 um die Schwenkachse 78 die Schwenkkraft über Zentrierzapfen 84 und Aufnahme 90 auf die Vorrichtung 51 übertragen wird, wodurch also Scherkräfte auf die Kupplungselemente 67/68 vermieden werden.

Durch das unabhängig von dem beweglichen Widerlager 48 verfahrbare Andocksystem 73 werden in der Spannstation 18 somit 14 Pneumatikanschlüsse sowie zwei weitere Hydraulikanschlüsse bereitgestellt, durch die in der in Fig. 5, 6 oder 7 gezeigten waagerechten Ausrichtung der Vorrichtung 51 diese mit weiteren Funktionen/Abfragen versorgt werden kann. Wenn das Andocksystem 73 nicht angedockt oder nicht vorhanden ist, kann die Vorrichtung 51 über die Drehverteilerplatte 88 verschwenkt werden, wobei die erforderlichen Hydraulikanschlüsse zum Lösen, Schließen und Halten der Spannelemente 53 über die Kupplungselemente 67/68 bereitgestellt werden.

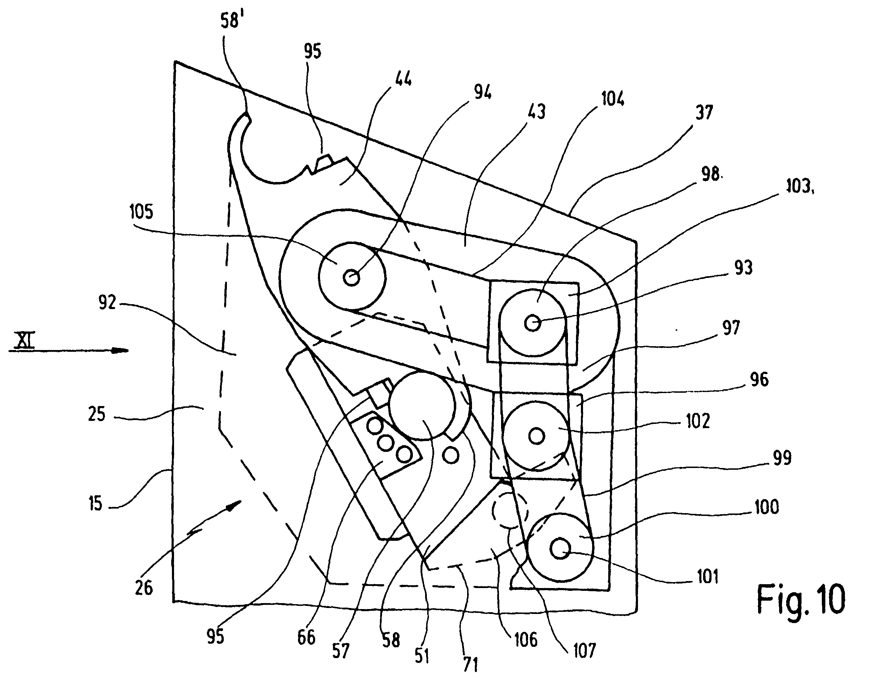

Fig. 10 zeigt jetzt eine Vorrichtung 51, die von einem Ladegerät 26 ergriffen und in den Laderraum 25 eingeschwenkt wurde. Fig. 10 zeigt dabei eine Draufsicht auf die Vorrichtung 51, die der Ansicht der Fig. 8 entspricht.

In der stark vereinfachten Darstellung eines oberen Bereiches des Ladegerätes 26 ist ein Tragteil 92 des Ladegerätes 26 abgebrochen und im übrigen lediglich gestrichelt dargestellt, um den Blick auf die Vorrichtung 51 freizugeben.

An dem Tragteil 92 ist zunächst der Schwenkarm 43 gelagert, der um eine Schwenkachse 93 verschwenkt werden kann. An dem anderen Ende des Schwenkarmes 43 ist um eine Drehachse 94 drehbar der Doppelgreifer 44 gelagert, der die die Vorrichtung 51 tragende Greiferhand 58 sowie eine freie Greiferhand 58' umfaßt. An jeder Greiferhand ist eine Sperrklinke 95 vorgesehen, die im Falle der Greiferhand 58 ausgefahren ist und den HSK 57 in der Greiferhand 58 hält. Bei der Greiferhand 58' ist die Sperrklinke 95 eingefahren, so daß diese Greiferhand 58' nach dem Ausschwenken des Schwenkarmes 43 und entsprechendem Drehen des Doppelgreifers 44 eine Vorrichtung aus einem Arbeitsraum einer Werkzeugmaschine entnehmen kann.

Der dazu erforderliche Antrieb umfaßt zum einen einen Schwenkmotor 96, der über einen Zahnriemen 97 ein Zahnrad 98 antreibt, das mit dem Schwenkarm 43 verbunden ist und auf der Schwenkachse 93 sitzt. Der Schwenkmotor 96 ist ferner über einen zweiten Zahnriemen 99 mit einem Zahnrad 100 verbunden, das unverdrehbar auf einer Koppelstange 101 sitzt, über die in noch zu beschreibender Weise ein zu dem Schwenkarm 43 paralleler Schwenkarm gesondert angetrieben wird. Es sei noch erwähnt, daß der Schwenkmotor 96 selbstverständlich ein eigenes Zahnrad 102 aufweist, auf dem beide Zahnriemen 97 und 99 nebeneinander angeordnet sind.

In der Schwenkachse 93 ist konzentrisch ein Drehmotor 103 angeordnet, der über einen Zahnriemen 104 ein Zahnrad 105 antreibt, das drehfest mit dem Doppelgreifer 44 verbunden ist. Durch die Anordnung des Drehmotors 103 auf der Schwenkachse 93 ist ein Antrieb des Doppelgreifers 44 unabhängig von der jeweiligen Lage des Schwenkarmes 43 möglich.

Fig. 10 zeigt ferner, daß die Trägerplatte 71 der Vorrichtung 51 mit einem Deckel 106 zur Abdeckung versehen ist, dem ein lediglich schematisch angedeutetes Handlingsystem 107 zugeordnet ist.

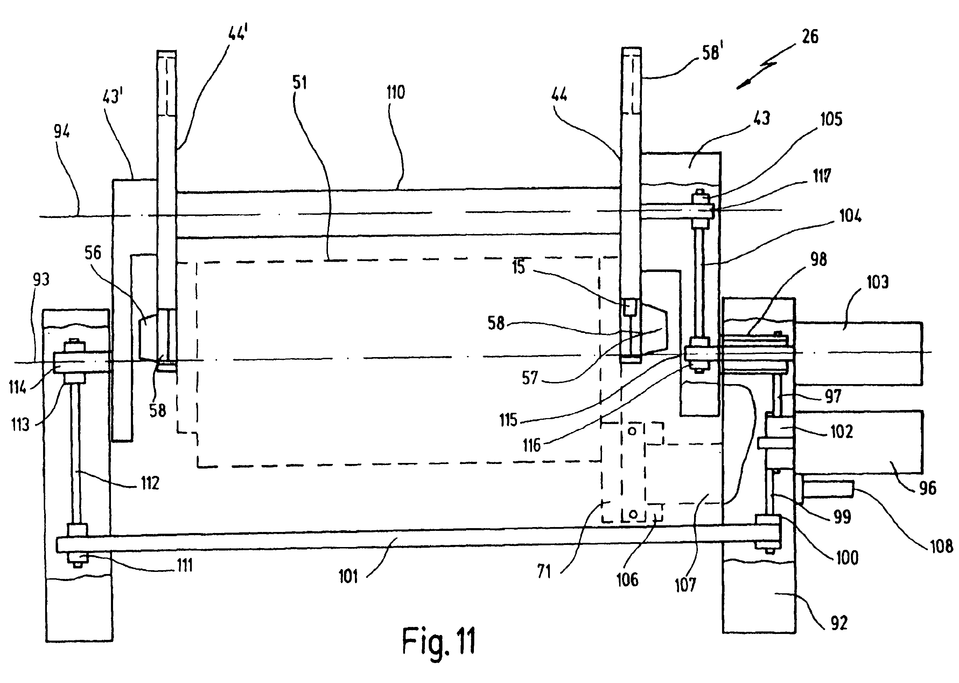

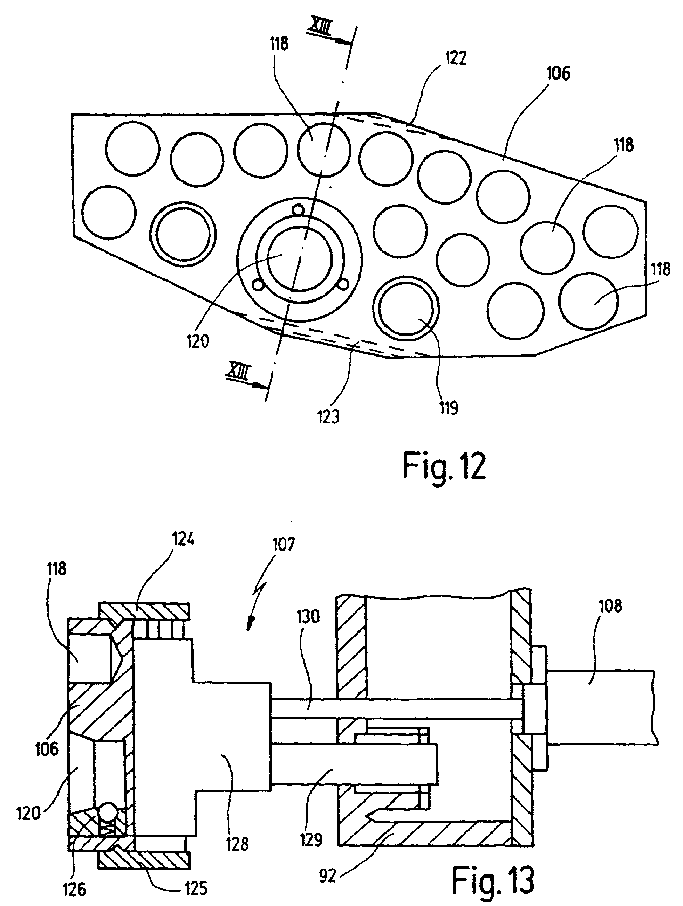

In Fig. 11, das eine schematische Ansicht längs des Pfeiles XI aus Fig. 10 ist, ist dieses Handlingsystem 107 unten rechts näher gezeigt, wobei dort zu erkennen ist, daß eine Antriebseinheit 108 für das Handlingsystem 107 an dem Tragteil 92 des Ladegerätes 26 befestigt ist. In dem eingeschwenkten Zustand, wie er in Fig. 10 und 11 gezeigt ist, liegt die Trägerplatte 71 unmittelbar vor dem Handlingsystem 107, so daß dieses zum Abnehmen/Aufsetzen des Deckels (106) nur eine Linearbewegung durchführen muß. Die Aufgabe des Deckels 106 sowie die Funktion des Handlingsystems 107 wird nachstehend im Zusammenhang mit den Fig. 12 und 13 erläutert.

Im oberen Bereich der Fig. 11 ist zu erkennen, daß parallel zu dem Doppelgreifer 44 ein weiterer Doppelgreifer 44' vorgesehen ist, wobei die beiden Doppelgreifer zueinander einen Abstand aufweisen, der es ermöglicht, daß sie mit ihren jeweiligen Greiferhänden 58, 58' eine Vorrichtung 51 an dem dafür vorgesehenen HSK 56, 57 ergreifen, wobei die lediglich an dem Doppelgreifer 44 gezeigte Sperrklinke 95 dafür sorgt, daß die Vorrichtung 51 unverlierbar gehalten wird.

Die beiden Doppelgreifer 44, 44' sind durch eine starre Welle 110 unverdrehbar miteinander verbunden, so daß sozusagen beide Doppelgreifer 44, 44' angetrieben werden, wodurch ein Verkanten der Vorrichtung 51 beim Drehen der Doppelgreifer 44, 44' um die Drehachse 94 vermieden wird.

Der parallele Doppelgreifer 44' sitzt an einem weiteren Schwenkarm 43', der parallel zu dem Schwenkarm 43 angeordnet und angetrieben ist. Dieser parallele Antrieb erfolgt über die Koppelstange 101, auf der von dem Zahnrad 100 abgelegen ein weiteres Zahnrad 111 sitzt, das über einen Zahnriemen 112 mit einem Zahnrad 113 in Eingriff ist, das wiederum drehfest mit einer Welle 114 verbunden ist, über die der Schwenkarm 43' verdrehbar ist.

Auf der rechten Seite von Fig. 11 ist noch zu erkennen, daß sich der Drehmotor 103 mit seiner Motorwelle 115 durch das hohle Zahnrad 98 hindurch erstreckt. Die Motorwelle 15 trägt an ihrem äußeren Ende ein Zahnrad 116, das über den Zahnriemen 104 mit dem Zahnrad 105 in Eingriff ist, das wiederum drehfest mit einer Welle 117 verbunden ist, die an der starren Welle 110 befestigt ist.

Auf diese Weise treibt der Schwenkmotor 96 synchron beide Schwenkarme 43, 43' an, so daß auch bei sehr schweren oder voluminösen Werkstücken die Vorrichtung 51 schnell und sicher aus dem Laderraum 25 heraus in den Arbeitsraum 17 bzw. in die Spannstation 18 geschwenkt werden kann. Durch die starre Verbindung zwischen den beiden Doppelgreifern 44, 44' über die Welle 110 erfolgt ferner auch das Drehen der Doppelgreifer 44, 44' synchron, so daß Vorrichtungen 51 sehr schnell gewechselt werden können. Durch dieses sehr starre System wird verhindert, daß beim Verschwenken und Verdrehen von Vorrichtungen 51 infolge der hohen zu bewegenden Massen Schwingungen auftreten, deren Abklingen abgewartet werden muß, bevor die Vorrichtung 51 zwischen festem Widerlager 35 und beweglichem Widerlager 48 eingespannt werden kann. Wegen dieser fehlenden Erschütterungen/Schwingungen lassen sich die Vorrichtungen aber nicht nur schneller austauschen, die während des Transportes der Vorrichtungen 51 lediglich durch die selbsthemmenden Spannelemente 53 gehaltenen Werkstücke 21 werden auch sicherer in Position gehalten, so daß die Bearbeitungsgenauigkeit insbesondere bei solchen Werkstücken gesteigert wird, die nacheinander von mehreren Werkzeugmaschinen 11, 12, 13 bearbeitet werden müssen. Zwischen den einzelnen Aufspannungen in den Arbeitsräumen 17 der Werkzeugmaschinen 11, 12, 13 verändern die Werkstücke 21 ihre Position auf der Vorrichtung 51 nicht, da diese zwar sehr schnell aber schwingungs- und erschütterungsfrei bewegt werden.

In Fig. 12 ist schließlich noch der bereits aus Fig. 10 und 11 bekannte Deckel 106 für die Trägerplatte 71 dargestellt, wobei Fig. 12 eine Draufsicht auf die der Trägerplatte 71 zugewandte Seite des Deckels 106 ist. Der Deckel 106 weist Aufnahmebohrungen 118 für die Kupplungselemente 72, Aufnahmebohrungen 119 für die Kupplungselemente 82 sowie eine Aufnahmebohrung 120 für das Steckerteil 83 der Verriegelungseinheit auf. Ferner sind am oberen sowie am unteren Rand des Deckels 106 Haltenuten 122, 123 vorgesehen, mit denen Backen 124, 125 des Handlingsystems 107 in Eingriff gelangen, wie dies in Fig. 13 gezeigt ist.

In der Schnittdarstellung der Fig. 13 ist zu erkennen, daß in der Aufnahmebohrung 120 zumindest eine Kugel-Feder-Rastung 126 vorgesehen ist, über die der Deckel 106 auf dem Steckerteil 83 verrastet.

Die Backen 124, 125 sind an einem pneumatisch betätigten Greifer 128 des Handlingsystems 107 befestigt, der wiederum über eine Führungsstange 129 verschiebbar an dem Tragteil 92 des Ladegerätes 26 geführt ist. Von der Antriebseinheit 108 gelangt eine Betätigungsstange 130 in den Greifer 128. In an sich bekannter Weise ist die Anordnung so getroffen, daß vor einer Betätigung der Antriebseinheit 108 zunächst die Backen 124, 125 pneumatisch geöffnet und dann über die Betätigungsstange 130 der Greifer 128 in Fig. 13 nach rechts gezogen wird, wodurch der Deckel 106 freigegeben wird und an der Trägerplatte 71 verbleibt, wenn die Vorrichtung 51 in den Arbeitsraum 17 einer Werkzeugmaschine 11, 12, 13 hineingeschwenkt wird. Durch den Deckel 106 wird jetzt die Mehrfachkupplung 70 im Arbeitsraum 17 einer Werkzeugmaschine 11, 12, 13 vor Verschmutzung geschützt.

Soll die Vorrichtung 51 dagegen in die Spannstation 18 eingeschwenkt werden, so wird über das Handlingsystem 107 bereits beim Verfahren des Ladegerätes 26 der Deckel 106 von der Trägerplatte 71 abgezogen, so daß beim Einschwenken der Vorrichtung 51 in die Spannstation 18 die Mehrfachkupplung 70 freiliegt und das Andocksystem 73 hier andocken kann. Selbstverständlich ist jeder Vorrichtung 51 ein eigener Deckel 106 zugeordnet, der nur in der Spannstation 18 vom Handlingsystem 107 getragen wird. Wurde die Vorrichtung 51 mit einem neuen Werkstück bestückt und in den Laderraum 25 eingeschwenkt, so setzt das Handlingsystem 107 während des Verfahrens des Ladegerätes 26 zu der ersten Werkzeugmaschine 11, 12 oder 13 den Deckel 106 auf die Trägerplatte 71 wieder auf, so daß für das Aufsetzen und Abnehmen des Deckels 106 keine zusätzliche Maschinenzeit erforderlich ist.

## Patentansprüche

1. Maschinenzentrum mit Werkzeugmaschinen (11, 12, 13), die jeweils einen Arbeitsraum (17) zum Bearbeiten von Werkstücken (21) aufweisen, eine Spannstation (18), in der zu bearbeitende Werkstücke (21) in Werkstückhalter (19) eingespannt werden, und einem Ladegerät (26), das die Werkstückhalter (19) zwischen der Spannstation (18) und dem Arbeitsraum (17) zumindest einer Werkzeugmaschine (11, 12, 13) transportiert,
**dadurch gekennzeichnet, daß** an dem Werkstückhalter (19) eine Mehrfachkupplung (70) zur Übertragung von fluidischer Energie vorgesehen ist, die in der Spannstation (18) wahlweise angedockt wird, der Werkzeughalter (19) eine Vorrichtung (51) mit selbsthemmenden Spannelementen (53) zum lagegenauen Einspannen eines Werkstückes (21) umfaßt, wobei die Vorrichtung ein Kupplungsmodul (66) zur Versorgung der Spannelemente (53) mit fluidischer Energie umfaßt, und die Vorrichtung (51) an zumindest einer (55) ihrer Stirnseiten (54, 55) ein Halteteil (56, 57) aufweist, über das sie in der Spannstation (18) und in einem Arbeitsraum (17) in ein Widerlager (48) eingespannt wird.

2. Maschinenzentrum nach Anspruch 1, **dadurch gekennzeichnet, daß** eine Abdeckung (106) für Kupplungselemente (72) der Mehrfachkupplung (70) vorgesehen ist.

3. Maschinenzentrum nach Anspruch 2, **dadurch gekennzeichnet, daß** ein Handlingsystem (107) zum Aufsetzen/Abnehmen der Abdeckung (106) vorgesehen ist.

4. Maschinenzentrum nach Anspruch 3, **dadurch gekennzeichnet, daß** das Handlingsystem (107) an dem Ladegerät (26) angeordnet ist und die Abdeckung (106) beim Transport des Werkstückhalters (19) aufsetzt/abnimmt.

5. Maschinenzentrum nach Anspruch 4, **dadurch gekennzeichnet, daß** das Ladegerät (26) zum Transportieren des Werkstückhalters (19) einen Schwenkarm (44) aufweist, der beim Verfahren des Ladegerätes (26) eingeschwenkt und zum Werkstückwechsel in den Arbeitsraum (19) bzw. die Spannstation (18) geschwenkt wird, und das Handlingsystem (107) an einem Tragteil (92) für den Schwenkarm (43) derart angeordnet ist, daß bei eingeschwenktem Schwenkarm (43) die Mehrfachkupplung (70) gegenüber dem Handlingsystem (107) zu liegen kommt.

6. Maschinenzentrum nach einem der Ansprüche 1 bis 5, **dadurch gekennzeichnet, daß** an dem Widerlager (48) eine der Mehrfachkupplung (70) zugeordnete Andockvorrichtung (73) mit Kupplungselementen (81) vorgesehen ist, die unabhängig von dem Widerlager (48) im Sinne eines Schließens und Öffnens der Mehrfachkupplung (70) verfahrbar ist.

7. Maschinenzentrum nach Anspruch 6, **dadurch gekennzeichnet, daß** die Mehrfachkupplung (70) eine an einer Stirnseite (55) angeordnete, mit Kupplungselementen (72) bestückte Trägerplatte (71) und die Andockvorrichtung (73) einen mit zugeordneten Kupplungselementen (81) bestückten Schlitten (74) umfaßt, wobei zwischen Trägerplatte (71) und Schlitten (74) eine Verriegelungseinheit (83, 87) vorgesehen ist.

8. Maschinenzentrum nach Anspruch 7, **dadurch gekennzeichnet, daß** die Abdeckung (106) einen Deckel (106) mit Aufnahmebohrungen (118, 119, 120) für Kupplungselemente (72, 82, 83) der Trägerplatte (71) umfaßt, wobei eine (120) der Aufnahmebohrungen (118, 119, 120) eine Kugel-Feder-Rastung (26) aufweist, die auf einem Kupplungselement (83) verrastet.

9. Maschinenzentrum nach einem der Ansprüche 3 bis 8, **dadurch gekennzeichnet, daß** das Handlingsystem (107) aktiv zu öffnende Greiferbacken (124, 125) umfaßt.

## Claims

1. A machining center having machine tools (11, 12, 13) each comprising a working space (17) for machining workpieces (21), a clamping station (18) in which workpieces (21) to be machined are clamped into workpiece holders (19), and a loading device (26) transporting said workpiece holders (19) between said clamping station (18) and a working space (17) of at least one machine tool (11, 12, 13),
**characterized in that** at said workpiece holder (19) a multiple coupling (70) for transferring fluidic energy is provided, said multiple coupling being selectably docked in said clamping station (19), said workpiece holder (18) comprises a fixture (51) having self-locking clamping elements (53) for positionally accurate clamping of a workpiece (21), said fixture having a coupling module (66) for supplying said clamping elements (53) with fluidic energy, and that said fixture (51) has on at least one (55) of its end faces (54, 55) a holding part (56, 57) with which it is clamped into a buttress (26) in the clamping station (18) and in a working space (17), respectively.

2. The machining center of claim 1, **characterized in that** a cover (106) for coupling elements (72) of said multiple coupling (70) is provided.

3. The machining center of claim 2, **characterized in that** a handling system (107) is provided for removing and attaching said cover (106).

4. The machining center of claim 3, **characterized in that** said handling system (107) is arranged on said loading device (26), and attaches and removes said cover (106) as the workpiece holder (19) is being transported.

5. The machining center of claim 4, **characterized in that**, for transporting the workpiece holders (19), said loading device (26) has a pivot arm (44) which pivots in during displacement of the loading device (26) and for workpiece changing is pivoted into the working space (19) and into the clamping station (18), respectively, and that said handling system (107) is arranged on a support part (92) for said pivot arm (43) such that when the pivot arm (43) is pivoted in, the multiple coupling (70) ends up located opposite the handling system (107).

6. The machining center of anyone of claims 1 through 5, **characterized in that** on the buttress (48) there is provided a docking mechanism (73), having coupling elements (71) and being associated with said multiple coupling (70), which docking mechanism is displaceable independently from said buttress (48) in terms of opening and closing the multiple coupling (70).

7. The machining center of claim 6, **characterized in that** the multiple coupling (70) has a support plate (71) arranged on one end face (55) and equipped with coupling elements (72), and that the docking mechanism (73) comprises a carriage (74) equipped with associated coupling elements (81), a locking unit (83, 87) being provided between said support plate (71) and said carriage (74).

8. The machining center of claim 7, **characterized in that** the cover (106) comprises a lid (106) having receiving orifices (118, 119, 120) for coupling elements (72, 82, 83) of said support plate (71), whereby one (120) of said receiving orifices (118, 119, 120) has a ball-spring-catch (26) which snap-locks onto a coupling element (83).

9. The machining center of anyone of claims 3 through 8, **characterized in that** said handling system (107) comprises actively opened gripper jaws (124, 125).

## Revendications

1. Centre d'usinage avec des machines-outils (11, 12, 13), qui comportent chacune un espace de travail (17) pour l'usinage des pièces (21), un poste de serrage (18), dans lequel les pièces (21) à usiner sont fixées dans le porte-pièces (19), et un dispositif de chargement (26), par lequel les porte-pièces (19) sont transportés entre le poste de serrage (18) et l'espace de travail (17) d'au moins une machine-outil (11, 12, 13), **caractérisé en ce que** sur le porte-pièces (19) est prévu un raccord multiple (70) pour la transmission de l'énergie d'un fluide, lequel peut être attaché au choix dans le poste de serrage (18), le porte-pièces (19) comporte un dispositif (51) avec des éléments de serrage (53) autobloquants destinés à maintenir en position exacte une pièce à usiner (21), le dispositif comportant un module de raccordement (66) destiné à alimenter les éléments de serrage (53) avec l'énergie d'un fluide, et le dispositif (51) comportant au moins sur une (55) de ses faces frontales (54, 55) un élément de fixation (56, 57), par lequel ledit dispositif est fixé dans une butée (48) dans le poste de serrage (18) et dans un espace de travail (17).

2. Centre d'usinage selon la revendication 1, **caractérisé en ce qu'**il est prévu un cache (106) pour les éléments de raccordement (72) du raccord multiple (70).

3. Centre d'usinage selon la revendication 2, **caractérisé en ce qu'**il est prévu un système de manoeuvre (107) destiné à poser et à retirer le cache (106).

4. Centre d'usinage selon la revendication 3, **caractérisé en ce que** le système de manoeuvre (107) est agencé sur le dispositif de chargement (26) et le cache (106) est posé ou retiré lors du transport du porte-pièces (19).

5. Centre d'usinage selon la revendication 4, **caractérisé en ce que** le dispositif de chargement (26) pour le transport du porte-pièces (19) comporte un bras pivotant (44), qui est amené dans une position non pivotée lors du déplacement du dispositif de chargement (26) et qui pivote vers l'espace de travail (17) ou le poste de serrage (18) pour le changement de pièce, et le système de manoeuvre (107) est agencé sur un support (92) pour le bras pivotant (43), de telle sorte que, lorsque le bras pivotant (43) est en position non pivotée, le raccord multiple (70) est situé en face du système de manoeuvre (107).

6. Centre d'usinage selon l'une quelconque des revendications 1 à 5, **caractérisé en ce qu'**il est prévu sur la butée (48) un dispositif d'attache (73), associé au raccord multiple (70) et muni d'éléments de raccordement (81) qui, indépendamment de la butée (48), sont mobiles dans le sens d'une fermeture et d'une ouverture du raccord multiple (70).

7. Centre d'usinage selon la revendication 6, **caractérisé en ce que** le raccord multiple (70) comporte une plaque de support (71), agencée sur une face frontale (55) et munie des éléments de raccordement (72), et le dispositif d'attache (73) comporte un chariot (74) muni d'éléments de raccordement (81) correspondants, une unité de verrouillage (83, 87) étant prévue entre la plaque de support (71) et le chariot (74).

8. Centre d'usinage selon la revendication 7, **caractérisé en ce que** le cache (106) est formé par un couvercle (106) avec des forures de réception (118, 119, 120) pour des éléments de raccordement (72, 82, 83) de la plaque de support (71), l'une (120) des forures de réception (118, 119, 120) étant munie d'un système d'enclenchement à bille et ressort (26) qui s'enclenche sur un élément de raccordement (83).

9. Centre d'usinage selon l'une quelconque des revendications 3 à 8, **caractérisé en ce que** le système de manoeuvre (107) comporte des mâchoires de préhension (124, 125) s'ouvrant de manière active.
